# FASCICULE DE BREVET EUROPEEN

(11) **EP 4 167 197 B1**
(45) Date de publication et mention de la délivrance du brevet: **02.12.2026**
(21) Numéro de dépôt: 21306427.2
(22) Date de dépôt: 12.10.2021
(51) Int. Cl.: G06V 20/58, G06V 20/80

(54) **PROCÉDÉ DE CALIBRATION D'UNE SOLUTION DE RÉ-IDENTIFICATION D'OBJET METTANT EN OEUVRE UN RÉSEAU DE PLUSIEURS CAMÉRAS**
VERFAHREN ZUR KALIBRIERUNG EINER LÖSUNG ZUR WIEDERERKENNUNG VON OBJEKTEN, BEI DEM EIN NETZWERK AUS MEHREREN KAMERAS EINGESETZT WIRD
METHOD FOR CALIBRATING A SOLUTION FOR RE-IDENTIFICATION OF AN OBJECT USING A NETWORK OF A PLURALITY OF CAMERAS

(43) Date de publication de la demande: 19.04.2023
(73) Titulaire: Bull SAS, 78340 Les Clayes-sous-Bois (FR)
(72) Inventeur: OSPICI, Matthieu, 38000 Grenoble (FR)
(74) Mandataire: IPAZ

(56) Documents cités:
- GB-A- 2 519 348
- WANG GUAN'AN ET AL: "Faster Person Re-identification", 16 August 2020, COMPUTER VISION - ECCV 2020 : 16TH EUROPEAN CONFERENCE, GLASGOW, UK, AUGUST 23-28, 2020 : PROCEEDINGS; [LECTURE NOTES IN COMPUTER SCIENCE ; ISSN 0302-9743], PAGE(S) 275 - 292, ISBN: 978-3-030-58594-5, XP047568608
- HAMED ALQAHTANI ET AL: "An Introduction to Person Re-identification with Generative Adversarial Networks", ARXIV.ORG, CORNELL UNIVERSITY LIBRARY, 201 OLIN LIBRARY CORNELL UNIVERSITY ITHACA, NY 14853, 12 April 2019 (2019-04-12), XP081168352

## Description

La présente invention concerne un procédé de calibration d'une solution de ré-identification d'objet mettant en œuvre un réseau de plusieurs caméras. Elle concerne également, un programme d'ordinateur et un dispositif mettant en œuvre un tel procédé de calibration, et un procédé et un système de ré-identification de personnes calibrés par un tel procédé de calibration.

Le domaine de l'invention est de manière générale le domaine de la ré-identification d'objets dans des images prises par plusieurs caméras, et plus particulièrement le domaine de la ré-identification de personnes dans des images prises par plusieurs caméras.

### État de la technique

Dans de nombreux domaines, il est très utile de pouvoir reconnaître automatiquement une personne à travers d'images ou de vidéos, fournies par différentes caméras.

De manière résumée, une ré-identification de personnes est réalisée de la manière suivante. Une personne est détectée sur une première image fournie par une première caméra et une première signature est calculée pour cette personne, par exemple par un réseau de neurones préalablement entrainé. Ensuite, une personne est détectée sur une deuxième image fournie par une deuxième caméra et une deuxième signature est calculée pour cette personne par le même réseau de neurones. Puis, une distance est calculée entre les première et deuxième signatures, telle qu'une distance cosinus ou une distance euclidienne. Cette distance est comparée à un seuil prédéterminé, appelé seuil de ré-identification dans la présente demande, pour décider si les personnes détectées sur les première et deuxième images sont en réalité la même personne, ou non.

On comprend que le choix du seuil de ré-identification est très important. Une valeur trop élevée du seuil de ré-identification engendrera beaucoup de faux positifs alors qu'une valeur trop basse du seuil de ré-identification aura pour effet beaucoup de faux négatifs. Il est donc important de déterminer une valeur de seuil de ré-identification qui soit la plus juste possible. Or, actuellement, il n'existe pas de technique performante pour déterminer de manière précise la valeur du seuil de ré-identification dans un système multi-caméra de ré-identification de personnes. Le document GB 2 519 348 A (VISION SEMANTICS LTD [GB]) 22 avril 2015 et l'article par WANG GUAN'AN ET AL: "Faster Person Re-identification", 16 août 2020, COMPUTER VISION - ECCV 2020 : 16TH EUROPEAN CONFERENCE, GLASGOW, UK, AUGUST 23-28, 2020 : PROCEEDINGS; [LECTURE NOTES IN COMPUTER SCIENCE ; ISSN 0302-9743], PAGE(S) 275 - 292, ISBN: 978-3-030-58594-5 divulguent de tels procédé d'art antérieur.

Un but de la présente invention est de remédier à au moins un des inconvénients de l'état de la technique.

Un autre but de l'invention est de proposer une calibration plus précise d'un procédé et/ou d'un système multi-caméras de ré-identification d'objets.

Un autre but de l'invention est de proposer une calibration plus personnalisable d'un procédé et d'un système multi-caméras de ré-identification d'objets.

### Exposé de l'invention

L'invention propose d'atteindre au moins l'un des buts précités par un procédé de calibration d'une solution de ré-identification d'objet mettant en œuvre un réseau de plusieurs caméras, ledit procédé comprenant les étapes suivantes réalisées pour au moins une paire de deux caméras parmi lesdites caméras :
- détection d'objets sur des images prises par chacune des deux caméras ;
- calcul d'une distance normalisée entre une signature numérique de chaque objet détecté par l'une des deux caméras, et celle de chaque objet **différent** détecté par l'autre des deux caméras ; et
- détermination, en fonction desdites distances normalisées, d'un seuil de distance, dit seuil de ré-identification, qui sera utilisé pour la ré-identification d'objets sur les images prises par lesdites deux caméras.

Ainsi, l'invention propose de déterminer un seuil de ré-identification d'objet sur des images prises par un réseau de caméras en prenant les caméras deux par deux. Autrement dit, dans le procédé selon l'invention, les caméras du réseau de caméras sont considérées deux à deux et un seuil de ré-identification est défini pour chaque combinaison de deux caméras : ce seuil de ré-identification est utilisé pour déterminer si deux objets détectés par ces deux caméras sont le même objet ou non. Ainsi, en définissant un seuil de ré-identification individuel pour chaque combinaison de deux caméras, il est possible de prendre en compte les différences entre ces caméras pour la ré-identification, par exemple des différences de champ de vue, des différences d'éclairage, etc. Ainsi, l'invention permet de réaliser une calibration plus précise et plus performante, réduisant le nombre de faux positifs et de faux-négatifs.

De plus, la solution proposée par la présente invention permet de déterminer des seuils de ré-identification individuels pour chaque combinaison de caméras, ce qui permet d'individualiser la calibration et donc de l'adapter facilement à toute solution de ré-identification, quelle que soit son architecture, ou en cas de changement de l'une des caméras, par exemple suite à une maintenance.

Dans la présente demande par « ré-identification d'objet » dans des images, on entend une ré-identification d'une personne, d'un animal ou encore d'un objet, tel que par exemple un véhicule, dans des images fournies par différentes caméras.

Dans la présente demande, par « paire de caméras », la combinaison d'une caméra du réseau de caméras avec une autre caméra dudit réseau de caméras. Au sens de la présente invention, lorsque le réseau comprend K caméras, avec K≥2, alors il existe (Kx(K-1))/2 paires de caméras. Autrement dit, chaque caméra du réseau de caméra peut être associée à chacune des autres caméras pour obtenir autant de paires de caméras.

Suivant des modes de réalisation, l'étape de détermination du seuil de ré-identification pour une paire de caméras peut comprendre les étapes suivantes :
- calcul, en fonction des distances normalisées, de plusieurs taux de faux-positifs associés, chacun à un seuil de distance normalisée ;
- détermination, par une interpolation desdites taus de faux-positifs et de seuils de distance normalisée, d'une fonction reliant le taux de faux-positifs au seuil de distance normalisée ; et
- calcul dudit seuil de ré-identification par ladite fonction prenant en entrée un taux de faux positifs prédéterminé.

Par exemple, les distances peuvent être normalisées entre 0 et 1, de sorte qu'une distance de 0 correspond à une identité totale de signatures numériques et une distance de 1 correspond à la plus grande distance entre deux signatures numériques.

Ainsi, un taux de faux-positifs peut être déterminé pour différents seuils de distance, par exemple par pas de 0.1 en partant de 1 : un premier taux de faux-positif peut être calculé pour un seuil distance normalisée de 0.9, un autre pour un seuil de distance normalisée de 0.8, et ainsi de suite. Bien entendu, cet exemple est donné à titre d'illustration seulement.

Pour un seuil de distance normalisée, par exemple 0.8, le taux de faux-positifs correspond au nombre de couples d'images pour lesquelles la distance normalisée calculée entre leurs signatures est supérieure ou égale audit seuil de distance normalisée. Par conséquent, la détermination du taux de faux positif pour un seuil de distance normalisée peut être réalisée par comptage de ces couples d'images.

Avantageusement, la fonction peut être déterminée par interpolation uni-variée reliant le seuil de distance normalisée au taux de faux-positifs, telle que : 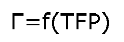 avec ┌ le seuil de distance, et TFP le taux de faux positif et f la fonction.

Une telle fonction peut être une fonction linéaire.

L'interpolation uni-variée peut être tout type d'interpolation réalisée par toute fonction d'interpolation prenant en compte les couples de valeurs {seuil de distance ; nombre de faux-positifs}. Par exemple, l'interpolation uni-variée peut être réalisée par la fonction d'interpolation décrite à la page suivante : https://docs.scipy.org/doc/scipy/reference/generated/scipy.interpolate.inter p1d.html

Avantageusement, le procédé de calibration selon l'invention peut comprendre, préalablement à l'étape de calcul de distance, une étape indiquant si deux objets détectés par les caméras de la paire de caméra sont, ou non, le même objet.

Autrement dit, lors de cette étape il est déterminé si deux images prises par deux caméras différentes correspondent au même objet.

Une telle étape peut être réalisée manuellement par un opérateur à qui les images sont présentées deux à deux, par exemple.

Suivant des modes de réalisation, pour au moins une image, l'étape de détection d'objet peut réaliser une extraction, par un détecteur d'objet, d'une zone de ladite image comprenant ledit objet, et en particulier de chaque zone de l'image comprenant un objet.

C'est cette zone qui est ensuite utilisée pour le calcul de la signature numérique de l'objet.

La détection d'une zone comprenant un objet peut être réalisée par toute technique connue de l'Homme du Métier. Suivant un exemple de réalisation non limitatif, la détection d'une, préférentiellement de chaque, zone d'une image comprenant un objet peut être réalisée par un détecteur de type Yolov5, par exemple décrit à la page suivante : https://pytorch.org/hub/ultralytics volov5/

Suivant des modes de réalisation, au moins une signature numérique d'un objet peut être calculée par un générateur comprenant un réseau de neurones préalablement entrainé.

Le réseau de neurones utilisé pour fournir une signature numérique d'un objet apparaissant dans une image peut être un réseau de neurones convolutif. En particulier, le réseau de neurones peut être un CNN, de type Resnet par exemple.

Le réseau de neurones peut comprendre 50 couches.

Le réseau de neurones peut être entrainé par un algorithme de retropropagation du gradient sur une base d'entrainement comprenant une multitude d'images pour lesquels la nature de l'objet qu'elles contiennent est annotée et renseignée au réseau de neurones.

Avantageusement, le procédé de calibration selon l'invention peut être réalisé pour chaque caméra du réseau prise en paire avec chacune des autres caméras dudit réseau de sorte à obtenir un seuil de ré-identification pour chaque paire de caméras.

Ainsi, si le réseau de caméras comprend K caméras, notées C₁ à C_{K}, alors un seuil de ré-identification SR_{i,j}=SR_{j,i} est déterminée pour la paire de caméras {Cᵢ,Cⱼ}, avec i≠j et i≤K et j≤K, de sorte qu'il est obtenu en tout (N*(N-1))/2 seuils de ré-identification différents.

Suivant un exemple de réalisation dans lequel le réseau de caméras comprend 5 caméras, on obtient 10 seuils de ré-identification, à savoir SR_{1,2}, SR_{1,3}, SR_{1,4}, SR_{1,5}, SR_{2,3}, SR_{2,4}, SR_{2,3}, SR_{3,4}, SR_{3,5} et SR_{4,3}.

Suivant un mode de réalisation, le procédé de calibration selon l'invention peut être appliqué à la ré-identification de personnes.

Selon un autre aspect de l'invention, il est proposé un programme d'ordinateur comprenant des instructions exécutables qui, lorsqu'elles sont exécutées par un appareil informatique, mettent en en œuvre toutes les étapes du procédé de calibration selon l'invention.

Le programme d'ordinateur peut être en tout langage informatique, tel que par exemple en langage machine, en C, C++, JAVA, Python, etc.

Selon un autre aspect de l'invention, il est proposé un dispositif de calibration comprenant des moyens configurés pour mettre en œuvre toutes les étapes du procédé de calibration selon l'invention.

Le dispositif de calibration peut être tout type d'appareil tel qu'un serveur, un ordinateur, une tablette, un calculateur, un processeur, une puce informatique, programmé pour mettre en œuvre le procédé de calibration selon l'invention, par exemple par le programme d'ordinateur selon l'invention.

Selon un autre aspect de l'invention, il est proposé un procédé de ré-identification d'objet sur des images prises par un réseau de plusieurs caméras, ledit procédé utilisant au moins un seuil de ré-identification associé à une paire de caméras dudit réseau de caméras, déterminé par un procédé de calibration selon.

Le procédé selon l'invention peut être utilisé pour la ré-identification de personne(s) sur des images fournies par différentes caméras.

Le procédé selon l'invention peut être utilisé pour la ré-identification d'objet(s) non humain(s), tel qu'une voiture, sur des images.

Selon un autre aspect de l'invention, il est proposé un système de ré-identification d'objet comprenant un réseau de plusieurs caméras, ledit système utilisant au moins un seuil de ré-identification associé à une paire caméras dudit réseau de caméras, déterminé par un procédé de calibration selon.

Le système selon l'invention peut être utilisé pour la ré-identification de personne(s) sur des images fournies par différentes caméras.

Le système selon l'invention peut être utilisé pour la ré-identification d'objet(s) non humain(s), tel qu'une voiture, sur des images.

### Description des figures et modes de réalisation

D'autres avantages et caractéristiques apparaîtront à l'examen de la description détaillée de modes de réalisation nullement limitatifs, et des dessins annexés sur lesquels :
- la FIGURE 1 est une représentation schématique d'un exemple de réalisation non limitatif d'un système de ré-identification selon l'invention ;
- la FIGURE 2 est une représentation schématique d'un exemple de réalisation non limitatif d'un procédé de ré-identification selon l'invention ;
- la FIGURE 3 est une représentation schématique d'un exemple de réalisation non limitatif d'un procédé de calibration selon l'invention ; et
- la FIGURE 4 est une représentation schématique d'un exemple de réalisation non limitatif d'un dispositif de calibration selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

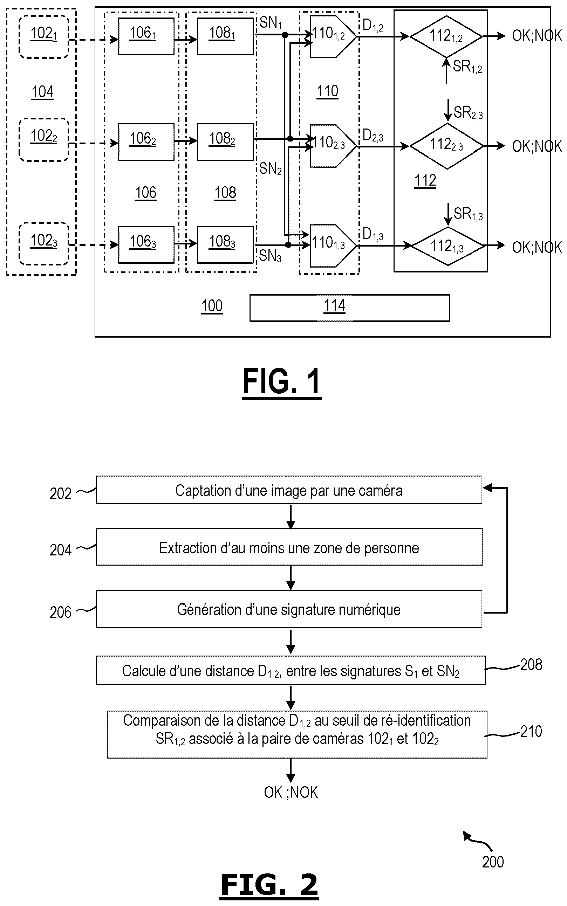

La FIGURE 1 est une représentation schématique d'un exemple de réalisation non limitatif d'un système de ré-identification selon l'invention.

Le système de ré-identification 100 de la FIGURE 1 peut être utilisé pour la ré-identification de tout type d'objets, tel que des personnes, des animaux, des véhicules, etc. Dans la suite, de manière nullement limitative, on considère que l'invention est mise en œuvre pour la ré-identification de personnes.

Le système 100 est utilisé pour la ré-identification de personnes à partir de flux vidéos provenant d'un réseau de K caméras 102₁-102_{K} distribuées dans l'espace et formant un réseau 104 de caméras, avec K≥2. Le réseau de caméra 104 peut faire partie, ou non, du système 100. Chaque caméra 102ᵢ est prévue pour prendre des images, et en particulier des flux vidéos. Dans l'exemple représenté, et de manière nullement limitative K=3.

Chaque image d'un flux d'images prise par une caméra 102ᵢ peut être analysée. Alternativement, seule une image toutes les E secondes peut être traitée. Par exemple E=5 secondes.

Le système 100 comprend, pour chaque caméra 102₁-102₃, un détecteur de personnes, respectivement 106₁-106₃, dans chaque image traitée. Chaque détecteur de personnes 106₁-106₃ peut être un détecteur de type yolov5 préalablement entrainé pour la détection de personnes. Chaque détecteur 106₁-106₃ permet de détecter une ou plusieurs personnes dans une image, et d'isoler et de fournir, pour chaque personne détectée, la zone de l'image comprenant ladite personne. Généralement, la zone de personne est une zone rectangulaire comprenant ladite personne. Bien entendu, le système 100 peut comprendre un unique détecteur 106 utilisé à tour de rôle pour chaque caméra 102₁-102₃, ou par chaque image traitée provenant des caméras 102₁-102₃.

Le système 100 comprend, pour chaque caméra 102₁-102₃, un générateur de signature, respectivement 108₁-108₃, qui prend en entrée une image, et en particulier une zone d'une image, comprenant une personne, et fournit en sortie une signature numérique, notée SN, pour cette personne ou zone d'image. Chaque générateur de signature 108₁-108₃ peut comprendre, de manière classique, un réseau de neurones CNN préalablement entrainé. Bien entendu, le système 100 peut comprendre un unique générateur de signatures 108 utilisé à tour de rôle pour chaque caméra 102₁-102₃, ou chaque zone d'image.

Le système 100 comprend en outre, pour chaque paire de caméras {102ᵢ,102ⱼ} un calculateur, respectivement 110_{1,2} 110_{1,3} et 110_{2,3}, pour calculer la distance, notée D_{1,2}, D_{1,3} et D_{2,3}, par exemple la distance cosinus, entre :
- une signature numérique, notée SNᵢ, générée pour une personne détectée sur une image prise par une caméra 102ᵢ, et
- une signature numérique, notée SNⱼ, générée pour une personne détectée sur une image prise par une caméra 102ⱼ ;
avec i≠j, et i,j≤K. La distance calculée peut être une distance normalisée dont la valeur est comprise entre 0 et 1. Bien entendu, alternativement, un unique calculateur 110 peut être utilisé, à tour de rôle, pour les caméras prises deux à deux.

Le système 100 comprend en outre un comparateur 112_{i,j} configuré pour comparer la distance calculée D_{i,j} entre deux personnes détectées sur deux caméras 102ᵢ et 102ⱼ à un seuil de ré-identification, noté SR_{i,j}, prédéterminé par le procédé de calibration selon l'invention, pour la paire formée par lesdites caméras (102ᵢ,102ⱼ). Autrement dit, le seuil de ré-identification associé à la paire de caméras (102ᵢ,102ⱼ) est spécifique à cette paire de caméras (102ᵢ,102ⱼ) et est différent du seuil de ré-identification, noté SR_{i,l} associée à la paire de caméras (102ᵢ,102ₗ). Si la distance calculée D_{i,j} est inférieure au seuil de ré-identification SR_{i,j} alors il s'agit de la même personne sur les deux images prises par les deux caméras 102ᵢ et 102ⱼ ; dans le cas contraire, il s'agit de deux personnes différentes. Bien entendu, alternativement, un unique comparateur 112 peut être utilisé, à tour de rôle, pour toutes les caméras prises deux à deux.

Le système 100 peut comprendre un dispositif de calibration, référencée 114 et représenté de manière très schématique sur la FIGURE 1, pour déterminer chaque seuil de ré-identification pour chaque paire de caméras, à savoir :
- le seuil de ré-identification SR_{1,2} associé à la paire de caméras 102₁ et 102₂ ;
- le seuil de ré-identification SR_{1,3} associé à la paire de caméras 102₁ et 102₃; et
- le seuil de ré-identification SR_{2,3} associé à la paire de caméra 102₂-102₃.

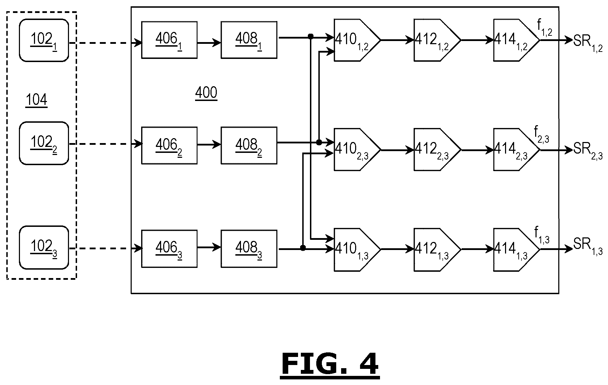

Un exemple non limitatif d'un tel dispositif de calibration selon l'invention sera décrit plus bas, en référence à la FIGURE 4.

Le dispositif de calibration peut être intégré au système 100, ou se présenter sous la forme d'un dispositif individuel.

La FIGURE 2 est une représentation schématique d'un exemple de réalisation non limitatif d'un procédé de ré-identification selon la présente invention.

Le procédé 200 de la FIGURE 2 peut être utilisé pour la ré-identification d'objets ou de personnes sur des images. On considère dans la suite que la ré-identification concerne des personnes.

Le procédé 200 utilise un réseau de caméras, tel que le réseau de caméras 102₁-102₃ de la FIGURE 1. Le procédé 200 peut être mis en œuvre dans un système de ré-identification selon l'invention, et en particulier par le système 100 de la FIGURE 1. Bien entendu, le nombre de caméras n'est nullement limitatif et est pris comme étant trois pour faciliter la description des exemples de réalisation.

Le procédé 200 comprend une étape 202 de prise d'une première image par une première caméra, par exemple 102₁, du réseau de caméras.

Cette image est analysée pour y détecter au moins une personne, et extraire, pour chaque personne détectée, une zone de l'image comportant ladite personne, lors d'une étape 204. Dans la suite, on considère pour simplifier la description et sans perte de généralités, que l'image contient une seule personne et que l'étape 204 fournit qu'une seule zone de personne.

Lors d'une étape 206, pour chaque personne, une signature numérique, notée SN₁, est générée en entrant la zone de la première image correspondant à cette personne dans un générateur de signature préalablement entrainé, tel que par exemple le générateur de signature 108 de la FIGURE 1.

Les étapes 202-206 sont réalisées pour une deuxième image prise par une deuxième caméra, par exemple la caméra 102₂, de sorte à obtenir une signature, notée SN₂, générée pour une personne se trouvant dans une zone de ladite autre image correspondant à cette personne.

Ensuite, lors d'une étape 208, une distance D_{1,2} est calculée entre les signatures SN₁ et SN₂, par exemple par le calculateur 110 de la FIGURE 1.

Lors d'une étape 210, cette distance D_{1,2} est comparée au seuil de ré-identification SR_{1,2} spécifique associé au couple de caméras {102₁,102₂} ayant pris les images à partir desquelles les signatures numériques ont été générées. Ce seuil de ré-identification SR_{1,2} est spécifique à ce couple de caméras {102₁,102₂}, et est préalablement calculé pour ce couple de caméras {102₁,102₂}, conformément à la présente invention. Si la distance D_{1,2}≤ SR_{1,2} alors il s'agit de la même personne apparaissant sur les images prises par cette paire de caméras {102₁,102₂}. Dans le cas contraire, les images ne correspondent pas à la même personne.

Ainsi, dans le procédé selon l'invention, les caméras du réseau de caméras sont considérées deux à deux et le seuil de ré-identification est spécifique à chaque couple/paire de caméras. Par exemple, pour une troisième image prise par encore une autre caméra du réseau de caméras, par exemple la caméra 102₃, les étapes 202-206 sont réitérées pour fournir une signature SN₃ d'une personne apparaissant sur ladite troisième image. Ensuite, lors de l'étape 208 une distance D_{1,3} est calculée entre les signatures SN₁ et SN₃ et cette distance est comparée à un seuil de ré-identification SR_{1,3} associé à la paire de caméras {102₁,102₃}. En même temps, ou à tour de rôle, une distance D_{2,3} peut être calculée entre les signatures SN₂ et SN₃ et cette distance est comparée au seuil de ré-identification SR_{2,3} associé à la paire de caméras {102₂,102₃}. Ainsi de suite...

Ainsi, il est possible de réaliser une ré-identification de personne sur un réseau comprenant plusieurs caméras, en réitérant les étapes du procédé 200 pour chaque paire de caméras dudit réseau de caméras.

Tel que décrit plus haut, l'invention propose d'utiliser des seuils de ré-identification calculés de manière individuelle pour chaque paire/couple de caméras d'un réseau de caméras.

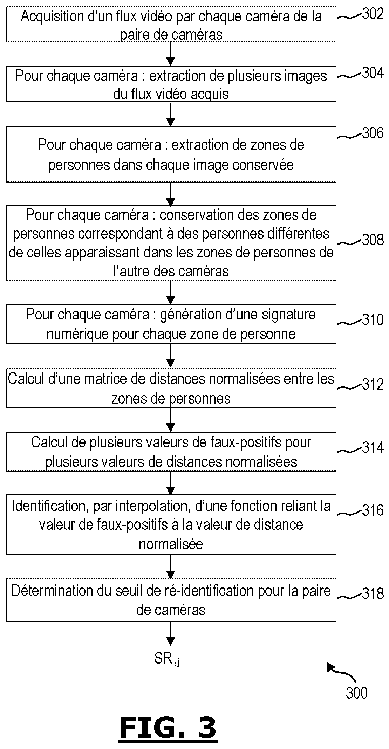

La FIGURE 3 est une représentation schématique d'un exemple de réalisation non limitatif d'un procédé de calibration selon la présente invention.

Le procédé 300 permet de déterminer des seuils de ré-identification individuel pour chaque couple/paire de caméras d'un réseau de caméras comprenant plusieurs caméras de sorte à déterminer un seuil de ré-identification individuel et spécifique à chaque paire/couple de caméras. Le procédé 300 peut être utilisé pour déterminer les seuils de ré-identification, S_{1,2}, S_{1,3} et S_{2,3}, utilisés dans le système 100 de la FIGURE 1 et/ou dans le procédé 200 de la FIGURE 2, et plus généralement chaque seuil de ré-identification, noté S_{i,j}, pour une paire de caméra {102ᵢ,102ⱼ}.

Le procédé 300 est réalisé pour chaque paire de caméras du réseau de caméras. Lorsque le réseau de caméras comprend au moins trois caméras, ces dernières sont considérées deux à deux, de sorte qu'il existe trois paires de caméras. Suivant une définition générale, lorsque le réseau comprend K caméras, alors il existe (Kx(K-1)))/2 paires de caméras. Le procédé 300 est réalisé, à tour de rôle ou en même, pour chacune des (Kx(K-1)))/2 paires de caméras pour identifier le seuil de ré-identification pour chaque paire de caméras.

Le procédé 300 comprend une étape 302 lors de laquelle chaque caméra d'une paire de caméras prend un flux vidéo d'une durée prédéterminée, par exemple de 20 minutes.

Lors d'une étape 304, plusieurs images sont extraites du flux vidéo prise par chaque caméra de la paire de caméras. Par exemple, une image est extraite, toutes les 5 secondes, ce qui, pour un flux vidéos de 20 minutes, fournit 240 images pour chaque caméra.

Lors d'une étape 306, chacune des 240 images provenant de chaque caméra est analysée pour y détecter des personnes, par exemple par un détecteur de type yolov5, tel que l'un quelconque des détecteurs 106₁-106₃ de la FIGURE 1. Ainsi, par exemple, pour chacune des 240 images une multitude de zones de personnes sont fournies. Ces zones de personnes sont mémorisées.

Lors d'une étape 308, chaque zone de personne obtenue pour une caméra de la paire de caméras, est comparée à chaque zone d'image de l'autre caméra de la paire de caméras, pour éliminer les zones de personnes correspondant à une même personne. Cette comparaison peut être réalisée par un opérateur à qui les zones de personnes sont présentées. Ainsi, à la fin de l'étape 308, pour chaque caméra de la paire de caméras, seules sont conservées les zones de personnes correspondant à des personnes différentes de celles apparaissant dans les zones de personnes de l'autre caméra de la paire de caméras. Par exemple, en fin d'étape 308 un vecteur de « N » zones d'images sont conservées pour l'une des caméras de la paire de caméras, et un vecteur de « M » zones d'images sont conservées pour l'autre des caméras de la paire de caméras.

Lors d'une étape 310, pour chacune des zones de personne conservées, une signature numérique est générée par un générateur de signature, par exemple par un réseau de neurones CNN préalablement entrainé, en particulier par un générateur de signature similaire ou identique à l'un quelconque des générateurs de signature 108₁-108₃ de la FIGURE 1. Ainsi, on obtient un vecteur de N signatures numériques pour l'une des caméras de la paire de caméras et un vecteur de M signatures numériques pour l'autre des caméras de la paire de caméras.

Lors d'une étape 312, pour chaque zone de personne détectée pour l'une des caméras de la paire de caméra, une distance normalisée est calculée entre la signature numérique de ladite zone de personne avec la signature de chacune des zones de personnes de l'autre caméra de la paire de caméras. La distance calculée entre deux signatures peut être la distance cosinus normalisée. La distance peut être calculée par exemple par l'un quelconque calculateur 110 de la FIGURE 1. Ainsi, en fin de l'étape 312, une matrice de NxM distances est obtenue.

Lors d'une étape 314, plusieurs valeurs de faux positifs sont calculés pour plusieurs valeurs de distances normalisées. Par exemple, une valeur de faux positif peut être calculée pour chaque distance normalisée par pas de 0.1 : 0.1, 0.2, 0.3, etc. Pour une valeur de distance normalisée, le nombre de faux-positifs correspond au nombre de distances normalisées supérieures ou égales à ladite valeur de distance normalisée dans la matrice NxM calculée lors de l'étape 312.

Lors d'une étape 316, une fonction f reliant le nombre de faux-positifs à la distance normalisée est identifiée par interpolation des données obtenues à l'étape 314. Une telle fonction f peut être identifiée par toute interpolation, en particulier par une interpolation uni-variée, et par exemple par la fonction d'interpolation décrite à la page : https://docs.scipy.org/doc/scipy/reference/generated/scipy.interpolate.inter p1d.html

Lors d'une étape 318 le seuil de ré-identification individuelle et spécifique pour la paire de caméras peut être choisie pour une valeur donnée de faux-positifs. Suivant un exemple de réalisation non limitatif, le seuil de ré-identification peut être choisie comme étant la distance normalisée correspondant à une valeur de faux-positif choisie par l'utilisateur, fournie par la fonction f identifiée lors de l'étape 316.

Les étapes du procédé sont réitérées pour chaque paire de caméras. Certaines étapes du procédé 300 peuvent être commun pour plusieurs itérations. Par exemple, pour chaque caméra, les étapes 302-306 peuvent être réalisée une seule fois et réutilisée par chaque paire dans laquelle cette caméra apparait.

La FIGURE 4 est une représentation schématique d'un exemple de réalisation non limitatif d'un dispositif de calibration selon la présente invention.

Le dispositif de calibration 400 peut être utilisé pour déterminer les seuils de ré-identification S_{i,j} utilisés dans le système 100 de la FIGURE 1 et/ou dans le procédé 200 de la FIGURE 2. En particulier, le dispositif de calibration 400 peut être intégré dans le système 100 de la FIGURE 1 et utiliser une partie des éléments dudit système 100.

Le dispositif 400 peut être utilisé pour calibrer un système de ré-identification comprenant un réseau de K caméras 102₁-102_{K} distribuées dans l'espace et formant un réseau 104 de caméras, avec K≥2. Dans l'exemple on limitatif représenté sur la FIGURE 4, et sans perte de généralité, K=3.

Chaque caméra 102₁-102₃ prend un flux vidéos d'une durée prédéterminée, par exemple de 20 minutes et le transmet au dispositif de calibration 400. Chaque image du flux vidéo pris par une caméra peut être analysée. Alternativement, pour chaque flux, seule une image toutes les E secondes peut être traitée. Par exemple E=5 secondes.

Le dispositif 400 comprend, pour chaque caméra 102₁-102₃, un détecteur de personne, respectivement 406₁-406₃, dans chaque image traitée. Chaque détecteur de personnes 406₁-406₃ peut être un détecteur de type Yolov5 préalablement entrainé pour la détection de personnes. Chaque détecteur 406₁-406₃ permet de détecter une ou plusieurs personnes dans une image, et d'isoler et de fournir, pour chaque personne détectée, la zone de l'image comprenant ladite personne. Généralement, la zone de personne est une zone rectangulaire comprenant ladite personne. Suivant un exemple de réalisation, lorsque le dispositif 400 est intégré dans le système 100 de la FIGURE 1, les détecteurs 406₁-406₃ peuvent être les détecteurs 106₁-106₃. Bie entendu, le dispositif 400 peut comprendre un unique détecteur 406 utilisé à tour de rôle pour chaque caméra 102₁-102₃.

Le dispositif 400 comprend, pour chaque caméra 102₁-102₃, un générateur de signature 408₁-408₃, qui prend en entrée une zone d'une image comprenant une personne, et fournit en sortie une signature numérique, notée SN, pour cette personne. Chaque générateur de signature 408₁-408₃ peut comprendre, de manière classique, un réseau de neurones CNN préalablement entrainé. Suivant un exemple de réalisation, lorsque le dispositif 400 est intégré dans le système 100 de la FIGURE 1, les générateurs 408₁-408₃ peuvent être les générateurs 108₁-108₃. Bien entendu, le dispositif 400 peut comprendre un unique générateur de signatures 408 utilisé à tour de rôle pour chaque caméra 102₁-102₃.

Le dispositif 400 comprend en outre, pour chaque paire de caméras {102ᵢ,102ⱼ} un calculateur, respectivement 410_{1,2}, 410_{1,3}, 410_{2,3}, pour calculer la distance, par exemple la distance cosinus, normalisée entre :
- une signature numérique générée pour chaque zone de personne issue de la caméra 102ᵢ, et
- une signature numérique générée pour chaque zone de personne issue de la caméra 102ⱼ ;
avec i≠j, et i,j≤K. La distance calculée peut être une distance normalisée dont la valeur est comprise entre 0 et 1. Suivant un exemple de réalisation, lorsque le dispositif 400 est intégré dans le système 100 de la FIGURE 1, les calculateurs 410_{1,2}, 410_{1,3}, 410_{2,3} peuvent être les calculateurs 110_{1,2}, 110_{1,3}, 10_{2,3}, respectivement. Bien entendu, alternativement, un unique calculateur 410 peut être utilisé, à tour de rôle, pour chaque paire de caméras.

Le dispositif 400 comprend en outre, pour chaque paire de caméras {102ᵢ,102ⱼ} un calculateur, respectivement 412_{1,2}, 412_{1,3}, 412_{2,3}, pour calculer des taux de faux-positifs pour différentes valeurs de distances normalisées, tel que décrit plus haut en référence à l'étape 314 par exemple. Bien entendu, alternativement, un unique calculateur 412 peut être utilisé, à tour de rôle, pour chaque paire de caméras.

Le dispositif 400 comprend en outre, pour chaque paire de caméras {102ᵢ,102ⱼ} un calculateur, respectivement 414_{1,2}, 414_{1,3}, 414_{2,3}, pour calculer, par interpolation une fonction, respectivement f_{1,2}, f_{1,3} et f_{2,3}, reliant le taux de faux-positifs à la distance normalisée, tel que décrit plus haut en référence à l'étape 316 par exemple. Bien entendu, alternativement, un unique calculateur 414 peut être utilisé, à tour de rôle, pour chaque paire de caméras.

Pour chaque paire de caméras, la fonction, respectivement f_{1,2}, f_{1,3} et f_{2,3}, est utilisée pour donner le seuil de ré-identification, respectivement SR_{1,2}, SR_{1,3} et SR_{2,3}, associée à ladite paire de caméras.

Chacun des modules décrit peut-être un module matériel, par exemple une puce électronique, un processeur, etc. ou, préférentiellement, un module logiciel. Chacun des modules peut être un module indépendant, ou intégré avec au moins un autre module.

Bien entendu l'invention n'est pas limitée aux exemples qui viennent d'être décrits. Par exemple, le nombre des caméras n'est pas limité à 3. De plus, le nombre d'images ou la durée des flux vidéo sont donnés à titre d'exemple seulement, sans perte de généralité.

## Revendications

1. Procédé (400) de calibration d'une solution de ré-identification d'objet mettant en œuvre un réseau (104) de plusieurs caméras (102₁-102₃), ledit procédé (400) comportant les étapes suivantes réalisées pour au moins une paire de deux caméras (102₁-102₂) parmi lesdites caméras (102₁-102₃) :
- détection (306) d'objets sur des images prises par chacune des deux caméras (102₁-102₂) ;
- calcul (312) d'une distance normalisée entre une signature numérique de chaque objet détecté par l'une (102₁) des deux caméras, et celle de chaque objet différent détecté par l'autre (102₂) des deux caméras ;
- détermination (314-318), en fonction desdites distances normalisées, d'un seuil de distance (SR_{1,2}), dit seuil de ré-identification, qui sera utilisé pour la ré-identification d'objets sur les images prises par lesdites deux caméras (102₁-102₂) ; et
- utilisation du seuil de ré-identification, dans la solution de ré-identification, pour la ré-identification d'objets sur les images prises par lesdites deux caméras, ladite utilisation comprenant :
• détection d'au moins un objet présent dans une première image prise par l'une desdites deux caméras, chaque objet détecté étant associé à une zone correspondante de la première image ;
• détection d'au moins un objet présent dans une deuxième image prise par l'autre desdites deux caméras, chaque objet détecté étant associé à une zone correspondante de la deuxième image ;
• pour chaque objet détecté, mise en œuvre d'un générateur de signature préalablement entraîné pour calculer une signature numérique associée à partir de la zone correspondante ;
des objets détectés dans la première image et dans la deuxième image étant considérés comme étant le même objet si une distance entre les signatures numériques calculées correspondantes est inférieure ou égale au seuil de ré-identification, et comme des objets différents sinon.

2. Procédé (400) selon la revendication précédente, **caractérisé en ce que** l'étape de détermination du seuil de ré-identification (SR_{1,2}) pour une paire de caméras (102₁-102₂) comprend les étapes suivantes :
- calcul (314), en fonction des distances normalisées, de plusieurs taux de faux-positifs associés, chacun à un seuil de distance normalisée ;
- détermination (316), par une interpolation desdites taux de faux-positifs et desdits seuils de distance normalisée, d'une fonction reliant le taux de faux-positifs au seuil de distance normalisée ; et
- calcul (318) dudit seuil de ré-identification par ladite fonction prenant en entrée un taux de faux positifs prédéterminé.

3. Procédé (400) selon la revendication précédente, **caractérisé en ce que** la fonction peut être déterminée par interpolation uni-variée et reliant le seuil de distance normalisée au taux de faux-positifs, telle que : 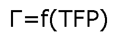 avec ┌ le seuil de distance, et TFP le taux de faux positif.

4. Procédé (400) selon l'une quelconque des revendications précédentes, **caractérisé en ce qu'**il comprend, préalablement à l'étape (312) de calcul de distance, une étape (308) indiquant si deux objets détectés par les caméras (102₁,102₂) de la paire de caméra sont, ou non, le même objet.

5. Procédé (400) selon l'une quelconque des revendications précédentes, **caractérisé en ce que**, pour au moins une image, l'étape (306) de détection d'objet réalise une extraction (306), par un détecteur d'objet (406₁-406₃), d'une zone de ladite image comprenant ledit objet.

6. Procédé (400) selon l'une quelconque des revendications précédentes, **caractérisé en ce qu'**au moins une signature numérique d'un objet est calculée par un générateur (408₁-408₃) comprenant un réseau de neurones préalablement entrainé.

7. Procédé (400) selon l'une quelconque des revendications précédentes, **caractérisé en ce qu'**il est réalisé pour chaque caméra prise en paire avec chacune des autres caméras du réseau de sorte à obtenir un seuil de ré-identification pour chaque paire de caméras.

8. Procédé (400) selon l'une quelconque des revendications précédentes appliqué à la ré-identification de personnes.

9. Programme d'ordinateur comprenant des instructions exécutables qui, lorsqu'elles sont exécutées par un appareil informatique, mettent en en œuvre toutes les étapes du procédé (400) de calibration selon l'une quelconque des revendications 1 à 8.

10. Dispositif (300) de calibration comprenant des moyens configurés pour mettre en œuvre toutes les étapes du procédé (400) de calibration selon l'une quelconque des revendications 1 à 8.

11. Procédé (200) de ré-identification d'objet sur des images prises par un réseau (104) de plusieurs caméras (102₁-102₃), ledit procédé utilisant au moins un seuil de ré-identification associé à une paire caméras dudit réseau de caméras (104), déterminé par un procédé (400) de calibration selon l'une quelconque des revendications 1 à 8.

12. Système (100) de ré-identification d'objet comprenant un réseau (104) de plusieurs caméras (102₁-102₃), ledit système (100) utilisant au moins un seuil de ré-identification associé à une paire caméras dudit réseau (104) de caméras, déterminé par un procédé (400) de calibration selon l'une quelconque des revendications 1 à 8.

## Patentansprüche

1. Verfahren (400) zur Kalibrierung einer Lösung zur Wiedererkennung eines Objekts unter Verwendung eines Netzwerks (104) aus mehreren Kameras (102₁ - 102₃), wobei das Verfahren (400) die folgenden Schritte umfasst, die für mindestens ein Paar von zwei Kameras (102₁ - 102₂) aus den Kameras (102₁ - 102₃) durchgeführt werden:
- Detektieren (306) von Objekten auf Bildern, die von jeder der zwei Kameras (102₁ - 102₂) aufgenommen werden;
- Berechnen (312) eines normierten Abstands zwischen einer digitalen Signatur jedes von einer (102₁) der zwei Kameras detektierten Objekts und derjenigen jedes anderen von der anderen (102₂) der zwei Kameras detektierten Objekts;
- Bestimmen (314 - 318) eines als Wiedererkennungsschwellenwert bezeichneten Abstandsschwellenwerts (SR_{1,2}), der für die Wiedererkennung von Objekten auf den von den zwei Kameras (102₁ - 102₂) aufgenommenen Bildern verwendet wird, in Abhängigkeit von den normierten Abständen; und
- Verwenden des Wiedererkennungsschwellenwerts in der Wiedererkennungslösung zur Wiedererkennung von Objekten auf den von den zwei Kameras aufgenommenen Bildern, wobei dieses Verwenden umfasst:
• Detektieren mindestens eines Objekts, das in einem ersten Bild, das von einer der zwei Kameras aufgenommen wurde, vorhanden ist, wobei jedes detektierte Objekt einer entsprechenden Zone des ersten Bildes zugeordnet ist;
• Detektieren mindestens eines Objekts, das in einem zweiten Bild, das von der anderen der zwei Kameras aufgenommen wurde, vorhanden ist, wobei jedes detektierte Objekt einer entsprechenden Zone des zweiten Bildes zugeordnet ist;
• für jedes detektierte Objekt, Verwenden eines zuvor trainierten Signaturgenerators zum Berechnen einer zugeordneten digitalen Signatur ausgehend von der entsprechenden Zone;
wobei im ersten Bild und im zweiten Bild detektierte Objekte als dasselbe Objekt betrachtet werden, wenn ein Abstand zwischen den entsprechenden berechneten digitalen Signaturen kleiner oder gleich dem Wiedererkennungsschwellenwert ist, und andernfalls als unterschiedliche Objekte betrachtet werden.

2. Verfahren (400) nach dem vorstehenden Anspruch, **dadurch gekennzeichnet, dass** der Schritt zum Bestimmen des Wiedererkennungsschwellenwerts (SR_{1,2}) für ein Paar von Kameras (102₁ - 102₂) die folgenden Schritte umfasst:
- Berechnen (314) mehrerer Falsch-Positiv-Raten, die jeweils einem Schwellenwert des normierten Abstands zugeordnet sind, in Abhängigkeit von den normierten Abständen;
- Bestimmen (316) einer Funktion, die die Falsch-Positiv-Rate mit dem Schwellenwert des normierten Abstands verbindet, durch eine Interpolation der Falsch-Positiv-Raten und der Schwellenwerte des normierten Abstands; und
- Berechnen (318) des Wiedererkennungsschwellenwerts durch die Funktion, wobei als Eingabe eine vorbestimmte Falsch-Positiv-Rate verwendet wird.

3. Verfahren (400) nach dem vorstehenden Anspruch, **dadurch gekennzeichnet, dass** die Funktion durch univariate Interpolation bestimmt werden kann und den Schwellenwert des normierten Abstands mit der Falsch-Positiv-Rate verbindet, und zwar wie folgt: 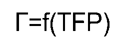 wobei Γ der Abstandsschwellenwert und TFP die Falsch-Positiv-Rate ist.

4. Verfahren (400) nach einem der vorstehenden Ansprüche, **dadurch gekennzeichnet, dass** es vor dem Schritt (312) zum Berechnen des Abstands einen Schritt (308) umfasst, der angibt, ob zwei von den Kameras (102₁, 102₂) des Paares von Kameras detektierte Objekte dasselbe Objekt sind oder nicht.

5. Verfahren (400) nach einem der vorstehenden Ansprüche, **dadurch gekennzeichnet, dass** für mindestens ein Bild im Schritt (306) des Detektierens eines Objekts ein Extrahieren (306) einer Zone des Bildes, welches das Objekt umfasst, durch einen Objekterkenner (406₁ - 406₃) durchführt wird.

6. Verfahren (400) nach einem der vorstehenden Ansprüche, **dadurch gekennzeichnet, dass** mindestens eine digitale Signatur eines Objekts durch einen Generator (408₁ - 408₃) berechnet wird, der ein zuvor trainiertes neuronales Netz umfasst.

7. Verfahren (400) nach einem der vorstehenden Ansprüche, **dadurch gekennzeichnet, dass** es für jede Kamera, die mit jeder anderen der Kameras des Netzwerks ein Paar bildet, durchgeführt wird, um einen Wiedererkennungsschwellenwert für jedes Paar von Kameras zu erhalten.

8. Verfahren (400) nach einem der vorstehenden Ansprüche, das zur Wiedererkennung von Personen angewendet wird.

9. Computerprogramm, umfassend ausführbare Anweisungen, die, wenn sie durch eine Rechnereinrichtung ausgeführt werden, alle Schritte des Verfahrens (400) zur Kalibrierung nach einem der Ansprüche 1 bis 8 implementieren.

10. Vorrichtung (300) zur Kalibrierung, umfassend Mittel, die zum Implementieren aller Schritte des Verfahrens (400) zur Kalibrierung nach einem der Ansprüche 1 bis 8 konfiguriert sind.

11. Verfahren (200) zur Wiedererkennung eines Objekts auf Bildern, die von einem Netzwerk (104) aus mehreren Kameras (102₁ - 102₃) aufgenommen werden, wobei das Verfahren mindestens einen einem Kamerapaar des Kameranetzwerks (104) zugeordneten Wiedererkennungsschwellenwert, der durch ein Verfahren (400) zur Kalibrierung nach einem der Ansprüche 1 bis 8 bestimmt wird, verwendet.

12. System (100) zur Wiedererkennung eines Objekts, umfassend ein Netzwerk (104) aus mehreren Kameras (102₁ - 102₃), wobei das System (100) mindestens einen einem Kamerapaar des Kameranetzwerks (104) zugeordneten Wiedererkennungsschwellenwert, der durch ein Verfahren (400) zur Kalibrierung nach einem der Ansprüche 1 bis 8 bestimmt wird, verwendet.

## Claims

1. A method (400) for calibrating an object re-identification solution implementing an array (104) of several of cameras (102₁-102₃), said method (400) comprising the following steps carried out for at least one pair of two cameras (102₁-102₂) from among said cameras (102₁-102₃):
- detecting (306) objects in images taken by each of the two cameras (102₁-102₂);
- computing (312) a normalized distance between a digital signature of each object detected by one (102₁) of the two cameras, and that of each **different** object detected by the other one (102₂) of the two cameras;
- determining (314-318), as a function of said normalized distances, a distance threshold (SR_{1,2}), called re-identification threshold, that will be used for re-identifying objects in the images taken by said two cameras (102₁-102₂); and
- using the re-identification threshold, in the re-identification solution, to re-identify objects in the images taken by said two cameras, said usage including:
• detecting at least one object present in a first image captured by one of said two cameras, each detected object being associated with a corresponding region of the first image;
• detecting at least one object present in a second image captured by the other of said two cameras, each detected object being associated with a corresponding region of the second image;
• for each detected object, using a pre-trained signature generator to compute an associated digital signature based on the corresponding region;
objects detected in the first image and in the second image being considered as the same object if a distance between the corresponding calculated digital signatures is less than or equal to the re-identification threshold, and different objects otherwise.

2. The method (400) according to the preceding claim, **characterized in that** the step of determining the re-identification threshold (SR_{1,2}) for a pair of cameras (102₁-102₂) comprises the following steps:
- computing (314), as a function of the normalized distances, several rates of false positives, each associated with a normalized distance threshold;
- determining (316), by interpolating said rates of false positives and said normalized distance thresholds, a function linking the rate of false positives to the normalized distance threshold; and
- computing (318) said re-identification threshold by virtue of said function taking a predetermined rate of false positives as input.

3. The method (400) according to the preceding claim, **characterized in that** the function can be determined by univariate interpolation and linking the normalized distance threshold to the rate of false positives, such that: 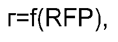 where 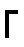 is the distance threshold, and RFP is the rate of false positives.

4. The method (400) according to any one of the preceding claims, **characterized in that** it comprises, prior to the step (312) of computing distance, a step (308) indicating whether or not two objects detected by the cameras (102₁,102₂) of the pair of cameras are, or not, the same object.

5. The method (400) according to any one of the preceding claims, **characterized in that**, for at least one image, the step (306) of detecting an object uses an object detector (406₁-406₃) to extract (306) an area of said image comprising said object.

6. The method (400) according to any one of the preceding claims, **characterized in that** at least one digital signature of an object is computed by a generator (408₁-408₃) comprising a previously trained neural network.

7. The method (400) according to any one of the preceding claims, **characterized in that** it is carried out for each camera taken as a pair with each of the other cameras of the network, so as to obtain a re-identification threshold for each pair of cameras.

8. The method (400) according to any one of the preceding claims applied to the re-identification of individuals.

9. A computer program comprising executable instructions, which, when they are executed by a computer device, implement all the steps of the calibration method (400) according to any one of claims 1 to 8.

10. A calibration device (300) comprising means configured to implement all the steps of the calibration method (400) according to any one of claims 1 to 8.

11. A method (200) for re-identifying an object in images taken by an array (104) of several cameras (102₁-102₃), said method using at
least one re-identification threshold associated with a pair of cameras of said array of cameras (104), determined by a calibration method (400) according to any one of claims 1 to 8.

12. A system (100) for re-identifying an object comprising an array (104)
of several cameras (102₁-102₃), said system (100) using at least one re-identification threshold associated with a pair of cameras of said array (104) of cameras, determined by a calibration method (400) according to any one of claims 1 to 8.
